# EUROPEAN PATENT APPLICATION

(11) **EP 1 318 684 A1**
(43) Date of publication of application: **11.06.2003**
(21) Application number: 02027568.1
(22) Date of filing: 09.12.2002
(51) Int. Cl.: H04Q 7/22

(54) **Broadcast service termination message in a mobile communication system**

(30) Priority: 08.12.2001 KR 2001077655
(71) Applicant: SAMSUNG ELECTRONICS CO., LTD., Suwon-City, Kyungki-do (KR)
(72) Inventor: Kim, Dae-Gyun, Samsung Electr. Co., Ltd., Suwon-city, Kyungki-do (KR); Chang, Yong, Samsung Electr. Co., Ltd., Suwon-city, Kyungki-do (KR)
(74) Representative: Grünecker, Kinkeldey, Stockmair & Schwanhäusser Anwaltssozietät

(57) **Abstract**

A method and apparatus for terminating a broadcast service in a mobile communication system supporting an HSBS. In the mobile communication system, a BS provides the broadcast service to at least one MS within the cell of the BS. To terminate the ongoing broadcast service, the MS generates a location registration message with type field set to a value indicating a broadcast service termination request when termination of the broadcast service is required, and transmits it to the BS. If the MS is the last one receiving the broadcast service from the BS, the BS terminates the broadcast service upon receipt of the location registration message.

## Description

### PRIORITY

This application claims priority to an application entitled "Method and Apparatus for Terminating Broadcast Service in a Mobile Communication System" filed in the Korean Industrial Property Office on December 8, 2001 and assigned Serial No. 2001-77655, the contents of which are incorporated herein by reference.

### BACKGROUND OF THE INVENTION

### 1. Field of the Invention

The present invention relates generally to a high-speed mobile communication system, and in particular, to a method and apparatus for terminating a broadcast service in a mobile station (MS).

### 2. Description of the Related Art

Communication technology is being developed so drastically that soon there will be no distinction between wired and wireless communication, and between nations in the future communication environment. In particular, IMT-2000 (International Mobile Telecommunication-2000) will contemporaneously provide a user with a variety of information including pictures and voice in real time. In the current mobile communication developmental stage, users can even view programs broadcast wirelessly through a mobile terminal, such as a cellular phone or a PCS (Personal Communication System) phone.

The present 3GPP2 (3^{rd} Generation Partnership Project 2) considers deployment of broadcast services through various service media and efficient use of resources in a mobile communication system. A broadcast service is implemented by delivering high-speed forward data to an MS without feedback information from it. This is similar to the current TV (Television) broadcasting service in concept.

However, if an existing common channel is so configured that the same broadcast service performance is ensured even at a cell boundary, an excess cell capacity waste results. Thus, the 3^{rd} generation mobile communication system provides broadcast service via a supplemental channel (SCH), which was proposed for packet data service, thereby reducing power consumption in a base station (BS) and ensuring acceptable performance.

While the SCH is a dedicated channel using a long code mask for a particular user, it is modified to use a common long code mask for the broadcast service. The modified SCH ensures the performance of a conventional common channel or higher by supporting autonomous handoff and outer coding that obviate feedback from an MS during the broadcast service. Furthermore, because the MS does not need to transmit power control information and feedback information, cell capacity, which otherwise might be consumed by reverse dedicated channels, is saved and theoretically, one cell can accommodate MSs to an unlimited extent.

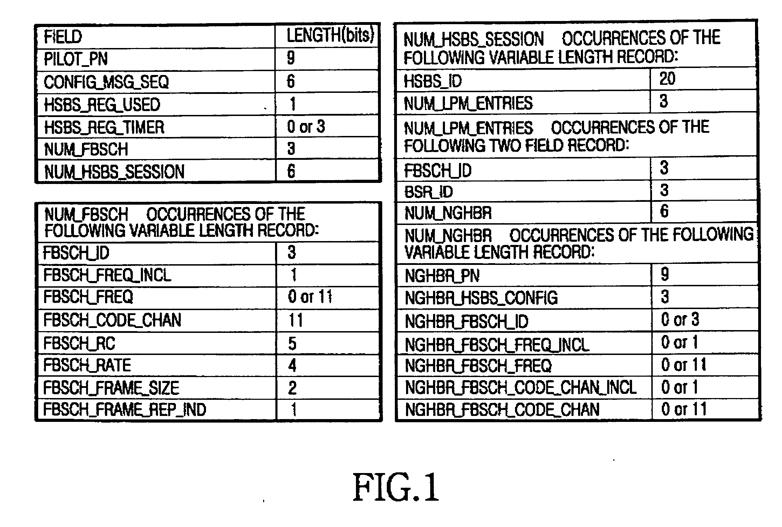

To receive a broadcast service, an MS receives a BSPM (Broadcast Service Parameter Message) from a BS via an initially tuned frequency channel and acquires broadcast service overhead information. FIG. 1 illustrates a format of a BSPM. Major fields of the BSPM will be described below.

Referring to FIG. 1, FBSCH_FREQ (Forward Broadcast Supplemental Channel_Frequency) indicates a broadcast service frequency. The MS determines the broadcast service frequency from the FBSCH_FREQ field and transits to the frequency. FBSCH_CODE_CHAN provides information about the code of a physical channel and FBSCH_RATE indicates the data rate of the physical channel. HSBS_ID (High Speed Broadcast Service_Index) indicates the type of a service that a contents server (CS) provides to the MS. FBSCH_ID is the index of the physical channel and BSR_ID (Broadcast Service Reference_Index) is a logical identifier for identifying the contents of the service. The MS determines logical information mapped to the physical channel and the service provided on the physical channel from the HSBS_ID, FBSCH_ID, and BSR_ID fields.

Fields having NGHBR (Neighbor) in their names provide information about neighbor cells. The NGHBR fields indicate to the MS the number of neighbor cells (NUM_NGHBR) and the code, frequency, and data rate of the FBSCH for the MS to implement a handoff to a neighbor cell. Particularly at an autonomous handoff, the MS acquires information about neighbor cells by the BSPM and combines signals received from corresponding neighbor cells, thereby improving reception performance.

The broadcast service is initiated when the MS is tuned to the broadcast service frequency set in FBSCH_FREQ. During the broadcast service, the MS registers its location to the system periodically or non-periodically when it is tuned to a new service frequency or a predetermined location registration period expires. HSBS_REG_TIMER in the BSPM illustrated in FIG. 1 indicates a timer value as a location registration period for regular location registration. The location registration period is, for example, between 1 and 10 minutes. This location registration period, used only for the broadcast service, is discriminated from a location registration period used for paging the MS.

The registration information for the broadcast service is provided to a CS to notify a broadcast service being provided to the MS and a broadcast service that the MS intends to receive. Specifically, a periodical registration of the MS can be used for billing for received broadcast service. In the existing systems, there is no particular procedure for the MS to terminate the broadcast service. Without periodical location registration from the MS, the broadcast service is automatically terminated.

Therefore, a user cannot terminate the broadcast service when he wants. Even after he stops viewing a broadcast program, his mobile terminal receives broadcast service data on an SCH at least until the location registration period expires. The resulting unnecessary traffic transmission to the MS leads to resources waste. Further, a BS maintains the broadcast channel even in the absence of an MS receiving the broadcast service. Moreover, the user may be charged more fees than for the time he has actually received the broadcast service.

### SUMMARY OF THE INVENTION

It is, therefore, an object of the present invention to provide a method and apparatus for terminating a broadcast service, thereby minimizing waste of wired and wireless resources in a mobile communication system.

It is another object of the present invention to provide a method and apparatus for generating and transmitting a message requesting termination of a broadcast service in an MS.

It is a further object of the present invention to provide a method and apparatus for terminating a broadcast service in an MS when the broadcast service is required to be terminated.

To achieve the above and other objects, in a mobile communication system in which a BS provides a broadcast service to at least one MS within a cell of the BS, to terminate the broadcast service provided to the MS, the MS generates a message requesting termination of the broadcast service when termination of the broadcast service is required and transmits it to the BS. If the MS is the last one receiving the broadcast service from the BS, the BS terminates the broadcast service upon receipt of the message.

Upon receipt of a message from the MS during the broadcast service, the BS determines whether the message requests termination of the broadcast service. If the message requests termination of the broadcast service, the BS notifies the MS of termination of the broadcast service provided to the MS.

In an apparatus for terminating a broadcast service during the broadcast service in the MS, a session manager opens, maintains, and closes a session for the broadcast service. A message generator generates a message requesting termination of the broadcast service upon closure of the session and transmits the message to the BS.

### BRIEF DESCRIPTION OF THE DRAWINGS

The above and other objects, features, and advantages of the present invention will become more apparent from the following detailed description when taken in conjunction with the accompanying drawings in which:
FIG. 1 illustrates a format of a BSPM received from a BS; FIG. 2 illustrates a format of a location registration message containing fields related with a mobile broadcast service according to the present invention;
FIG. 3 is a block diagram of an MS to which the present invention is applied;
FIG. 4 is a block diagram of a mobile broadcast service system to which the present invention is applied;
FIG. 5 is a diagram illustrating a signal flow for registering a BS to a multicast group to provide a broadcast service by IP multicast in the mobile broadcast service system;
FIG. 6 is a block diagram of an apparatus for performing an HSBS termination procedure in the MS according to an embodiment of the present invention;
FIG. 7 is a flowchart illustrating an operation in the MS for transmitting a message requesting termination of the HSBS according to the embodiment of the present invention;
FIG. 8 is a flowchart illustrating an operation in the BS for terminating the HSBS according to the embodiment of the present invention; and
FIG. 9 is a diagram illustrating a signal flow for deregistering the BS from the multicast group in the mobile broadcast service system according to the embodiment of the present invention.

### DETAILED DESCRIPTION OF THE PREFERRED EMBODIMENT

A preferred embodiment of the present invention will be described herein below with reference to the accompanying drawings. In the following description, well-known functions or constructions are not described in detail since they would obscure the invention in unnecessary detail.

A feature of the present invention is that upon receipt of a broadcast service termination request from an MS or when the MS discontinues its location registration, a broadcast service is terminated for the MS in a mobile communication system supporting high-speed broadcast service (HSBS). Therefore, the broadcast service termination request is processed in real time.

The MS transmits a predetermined location registration message periodically or non-periodically to the mobile communication system. The location registration message includes a field indicating a cause for location registration. If the field is set to indicate an HSBS termination request, a BS considers the location registration message to be a broadcast service termination request message.

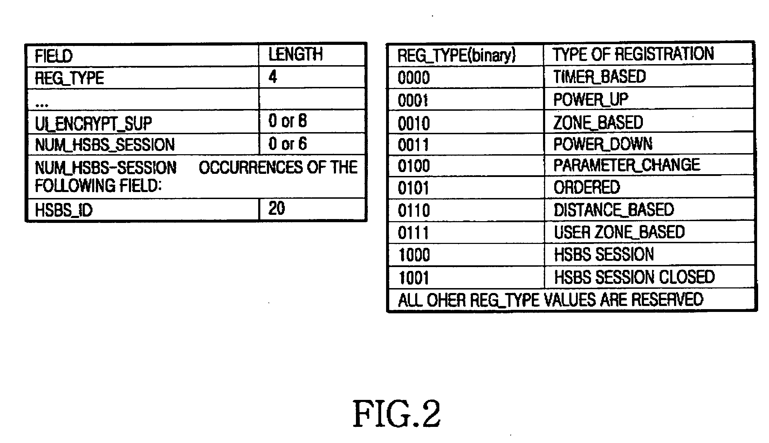

FIG. 2 illustrates a format of a location registration message used to request termination of a broadcast service according to the present invention. Referring to FIG. 2, HSBS_ID indicates the type of a broadcast service provided to an MS by a CS, and REG_TYPE indicates a cause for location registration. That is, the location registration message is used for the broadcast service indicated by HSBS_ID.

If REG_TYPE is 0000, it indicates that a predetermined location registration period has expired. If REG_TYPE is 0001, it indicates power-on. If REG_TYPE is 0010, it indicates that the MS enters a new registration zone. If REG_TYPE is 0011, it indicates power-off. If REG_TYPE is 0100, it indicates change of a system parameter. If REG_TYPE is 0110, it indicates that the distance between the MS and a BS is changed by a predetermined unit. If REG_TYPE is 1000 (HSBS Session), it indicates location registration for initiation or maintenance of an HSBS. Each time a broadcast service is initiated or a location registration period set by the BS expires during the broadcast service, the MS transmits a location registration message having REG_TYPE set to 1000 to the BS. As stated above, this location registration period is discriminated from a typical location registration period. Each time the location registration period, set by the BS at the start of the broadcast service, expires, the location registration message is transmitted.

According to the present invention, REG_TYPE is set to 1001 to request termination of the HSBS. Basically, when the MS does not register its location periodically, the HSBS is automatically terminated. The HSBS is also terminated if REG_TYPE is set to the HSBS termination request value.

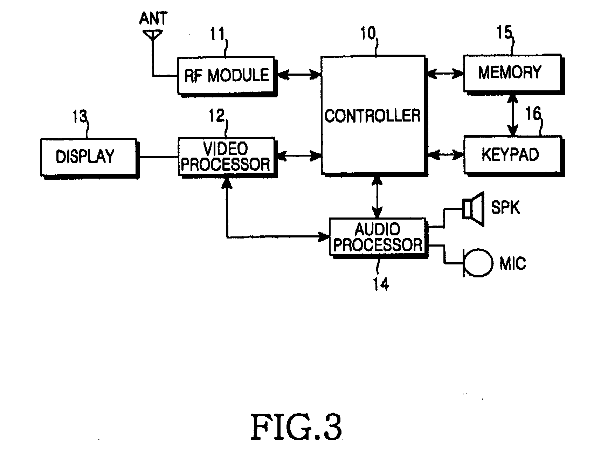

FIG. 3 is a block diagram of an MS to which the present invention is applied. Referring to FIG. 3, a controller 10 provides overall control to the MS. A memory 15 includes a program memory, a data memory, and a non-volatile memory. The program memory is a ROM (Read Only Memory) for storing a program for controlling the whole operation of the MS. The data memory is a RAM (Random Access Memory) for temporarily storing data generated during the operation of the MS. The non-volatile memory is an EEPROM (Electrically Erasable Programmable Read Only Memory) for storing telephone numbers registered for user-friendly functions such as short dialing, and system I parameters.

A keypad 16 generates command key signals for controlling the operation of the controller 10 and data input key signals, and feeds the key signals to the controller 10. A display 13 displays key signals from the keypad 16 and information from the controller 10, e.g., status information under the control of the controller 10.

An RF (Radio Frequency) module 11 downconverts an RF signal received through an antenna (ANT) and outputs audio and video data according to a TV channel after baseband filtering, PN (Pseudo Noise) despreading, Walsh despreading, and deinterleaving of the downconverted signal.

A video processor 12, which is connected to the display 13, displays the video data on the display 13 after predetermined processing. An audio processor 14, which is connected to a speaker (SPK) and a microphone (MIC), converts the audio data to an analog voice signal, outputs it to the speaker, and processes a voice signal received through the microphone.

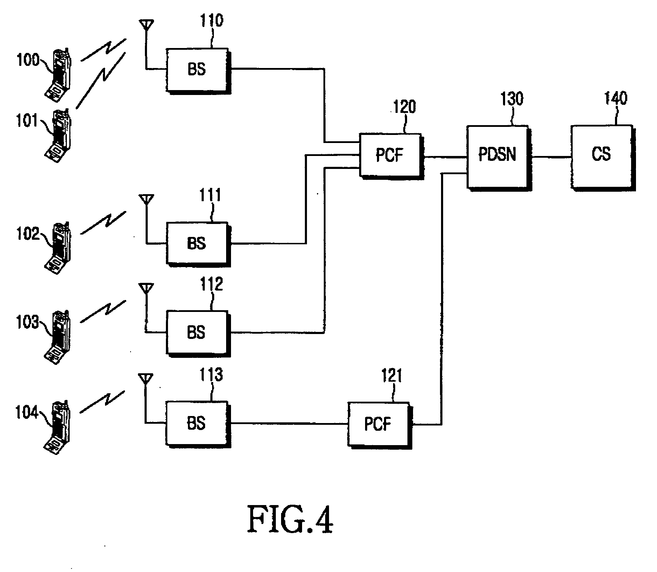

FIG. 4 is a block diagram of an HSBS system to which the present invention is applied. In FIG. 4, a CS 140, a PDSN (Packet Data Serving Node) 130, PCFs (Packet Control Function blocks) 120 and 121, and BSs 110 to 113 are connected to one another over an IP (Internet Protocol)-based packet communication network. The CS 140 provides video and audio data for HSBS in compressed IP packets to the PCFs 120 and 121 through the PDSN 130 over a packet communication network like the Internet. The PCFs 120 and 121 transmit the video and audio data to the plurality of BSs 110 to 113 connected to them. Thereafter, the BSs 110 to 113 transmit the video and audio data in RF signals to a plurality of MSs 100 to 104.

IP multicast is used to deliver the video and audio data from the CS 140 to the BSs 110 to 113. The BSs 110 to 113 form a multicast group that receives IP multicast data from the CS 140. A multicast router (MR) (not shown), connected to the BSs 110 to 113, maintains member information about the multicast group. The MR can also be connected to other entities like a PCF. That is, the CS 140 broadcasts IP multicast data to the BSs 110 to 113 in the multicast group and the BSs 110 to 113 in turn deliver the IP multicast data to the MSs 100 to 104 within their service areas.

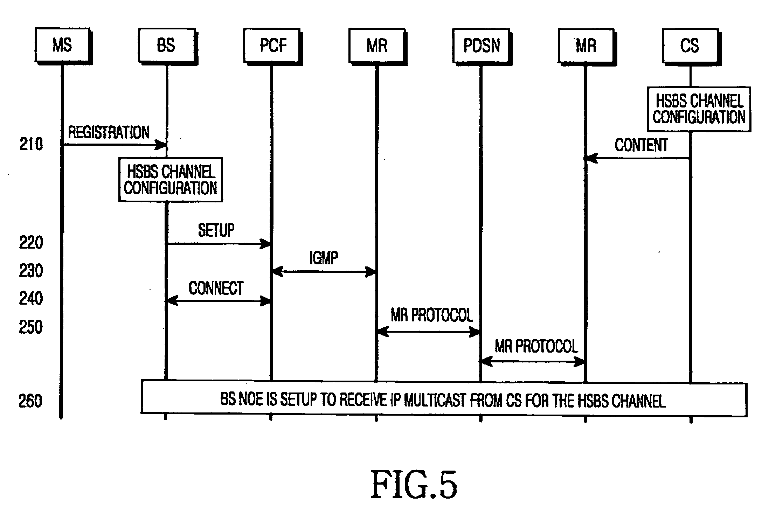

FIG. 5 is a diagram illustrating a signal flow for registering a BS to a multicast group to provide a broadcast service by IP multicast in the mobile broadcast service system. Referring to FIG. 5, upon receipt of a Registration message for initiating an HSBS from an MS, a BS determines whether the MS is the first one to receive the HSBS within the service area of the BS. If the MS is the first HSBS recipient, the BS configures an HSBS channel (SCH) in step 210. If the MS is not the first HSBS recipient, which implies that the BS has already been registered to a multicast group, subsequent steps need not be performed. Without receiving the Registration message from the MS, the BS can initiate the HSBS by a command from the PDSN.

After the HSBS channel configuration, the BS transmits an A9-Setup-A8 message to a PCF in step 220. A9 and A8 represent A8/A9 interfacing for transmitting the Setup message from the BS to the PCF. The Setup message includes an end IP address for HSBS channel connection. Upon receipt of the Setup message, the PCF determines that the BS serves as an intermediate node for the HSBS. The PCF then registers the BS to the multicast groups for the HSBS by exchanging known IGMP (Internet Group Management Protocol)-based messages with an MR connected to the PCF in step 230. The MR updates multicast routing information in the IGMP procedure. In step 240, the PCF transmits an A9-Connect-A8 message to the BS, notifying the registration to the multicast group.

The MR transmits the updated multicast routing information to other corresponding MRs through the PDSN by a multicast routing protocol in step 250. The updated multicast routing information is eventually delivered to the CS. Thus, the CS transmits broadcast data in the form of IP multicast data to BSs registered in the multicast group. In step 260, the BS receives the IP multicast data from the CS and transmits it to the MS on the HSBS channel.

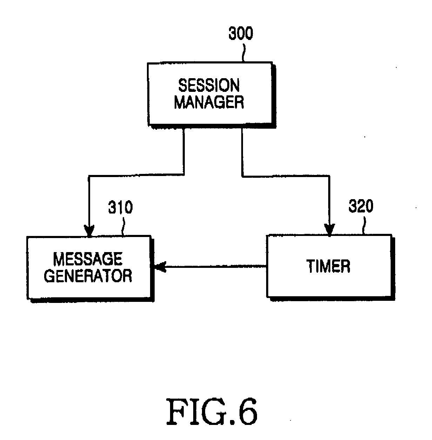

FIG. 6 is a block diagram of an apparatus for terminating an HSBS in an MS according to an embodiment of the present invention. Referring to FIG. 6, a session manager 300 manages the state (i.e., initiation, maintenance, and release) of an HSBS session between the MS and a CS. The session is defined as a series of interactions between the MS and the CS during the HSBS. During the HSBS, a timer 320 is set to a location registration period for the HSBS according to HSBS_REG_TIMER in an HSBS message received from a BS. Each time the location registration period expires, the timer 320 notifies a message generator 310 of the time expiration. The message generator 310 generates a location registration message having REG_TYPE set to 1000 indicating maintenance of the HSBS and transmits it to the BS on a radio control channel.

When the MS requests termination of the ongoing HSBS or transition to a new broadcast service, or when the HSBS is terminated due to reception of a paging message for connection to a voice call or a general data call, the session manager 300 closes an HSBS session and notifies the message generator 310 of the session closure. The message generator 310 then generates a location registration message having REG_TYPE set to 1001 to indicate the HSBS termination and transmits it to the BS on a radio channel.

The information indicating the HSBS termination is also delivered to the timer 320. Therefore, even if a location registration period for the HSBS expires, the timer 320 does not notify the message generator 310 of the time expiration. Hence, a location registration message indicating maintenance of the broadcast service is not transmitted after the termination of the HSBS.

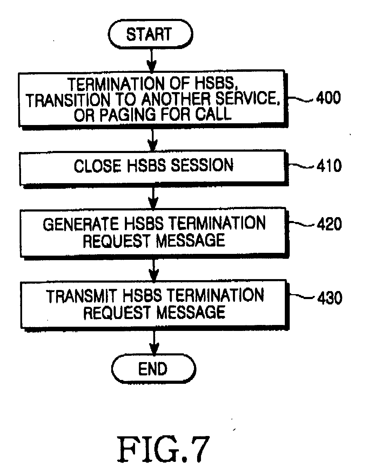

FIG. 7 is a flowchart illustrating an operation in an MS for transmitting a message requesting termination of an HSBS according to the embodiment of the present invention. Referring to FIG. 7, if an MS terminates an HSBS, transits to a new broadcast service indicated by HSBS_ID, or is paged for an incoming voice/data call in step 400, the session manager 300 closes an ongoing HSBS session in step 410 and notifies the message generator 310 of the HSBS termination. The message generator 310 generates a location registration message having REG_TYPE set to 1001 to indicate the HSBS termination in step 420 and transmits it to a BS on a radio control channel in step 430.

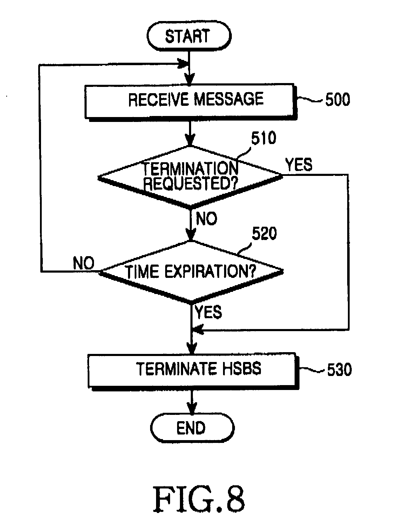

FIG. 8 is a flowchart illustrating an operation in a BS for receiving the message indicating an HSBS termination request according to the embodiment of the present invention. Referring to FIG. 8, upon receipt of a message from an MS receiving an HSBS from the BS in step 500, the BS determines whether the received message requests termination of the HSBS in step 510. If it does, the BS closes an ongoing HSBS session for the MS, thus terminating the HSBS in step 530. On the other hand, if the message does not request HSBS termination, the BS determines whether a timer set to a predetermined location registration period has expired in step 520. The timer is reset each time the BS receives a location registration message requesting maintenance of the HSBS from the MS.

If the BS does not receive the location registration message requesting maintenance of the HSBS from the MS until time expiration, the BS closes the HSBS session in step 530. Combined use of termination request-based HSBS termination and timer-based HSBS termination prevents session closure failure.

Meanwhile, when the BS closes the HSBS session for the MS, it determines whether the MS is the last one that has received the HSBS within the service area of the BS. If the MS is the last one, the BS must be deregistered from a multicast group. On the other hand, if the MS is not the last one, the BS notifies a PCF or a CS of the HSBS termination for the MS.

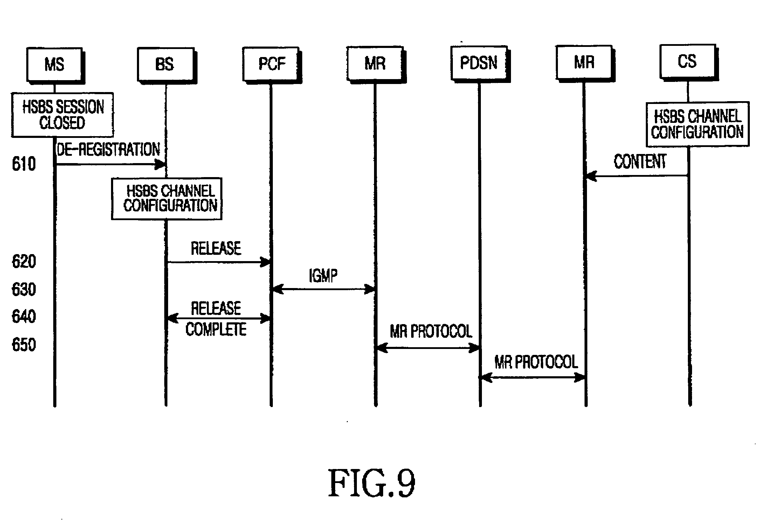

FIG. 9 is a diagram illustrating a signal flow for deregistering a BS from a multicast group upon termination of the HSBS for an MS according to the embodiment of the present invention. The deregistering procedure is performed at each end, such as a PCF and a PDSN, as well as at the BS. That is, if there is no MS receiving the HSBS within the service area of the PCF or the PDSN, it is deregistered from a multicast group.

Referring to FIG. 9, if an HSBS is to be terminated, the MS transmits a message requesting termination of the HSBS to the BS in step 610. Here, the message is a location registration message having REG_TYPE set to 1001 indicating termination of the HSBS. If the MS is not the only one HSBS recipient, the BS simply notifies the PCF and/or PDSN of the HSBS termination for the MS since the HSBS must continue for other MSs. However, if the HSBS is terminated for the last MS, the BS performs the following steps to terminate the HSBS, considering that an HSBS channel does not need to be maintained.

In step 620, the BS releases the HSBS channel and transmits an A9-Release-A8 message to the PCF. Here, A9 and A8 refer to A8/A9 interfacing between the BS and the PCF. The Release message includes the IP address of an end to which the HSBS channel is connected by A8. Upon receipt of the Release message, the PCF determines that the BS is to be deregistered from the multicast group. Then the PCF deregisters the BS from the multicast group by exchanging IGMP messages with an MR connected to the PCF in step 630. In the IGMP procedure, the MR updates multicast routing information.

The PCF transmits an A9-Release-A8 Complete message to the BS, indicating completion of the deregistration in step 640.

The MR transmits the updated multicast routing information to other corresponding MRs and eventually to a CS through the PDSN by a multicast routing protocol in step 650. Thus, the CS does not deliver IP multicast data to the BS.

In accordance with the present invention, an MS can register for a broadcast service or terminate the broadcast service, in real time, by transmitting a location registration message used to request initiation, maintenance, or termination of the broadcast service. Therefore, waste of wired/wireless resources is prevented and billing is reasonably performed.

While the invention has been shown and described with reference to a certain preferred embodiment thereof, it will be understood by those skilled in the art that various changes in form and details may be made therein without departing from the spirit and scope of the invention as defined by the appended claims.

## Claims

1. A method of terminating a broadcast service in a mobile station (MS) in a mobile communication system in which a base station (BS) provides the broadcast service to at least one MS, the method comprising the steps of:
generating a message requesting termination of the broadcast service when termination of the broadcast service is required; and
transmitting the message to the BS thereby terminating the broadcast service.

2. The method of claim 1, wherein if the MS is the last MS receiving the broadcast service from the BS, the BS terminates the broadcast service by releasing a broadcast channel upon receipt of the message.

3. The method of claim 1, wherein the message requesting termination of the broadcast service is a location registration message including a location registration cause field set to a value indicating a broadcast service termination request.

4. The method of claim 3, further comprising the step of periodically transmitting to the BS the location registration message including the location registration cause field set to a value indicating a broadcast service maintenance request.

5. A method of terminating a broadcast service in a base station (BS) that provides the broadcast service to at least one MS in a mobile communication system, comprising the steps of:
upon receipt of a message from the MS during the broadcast service, determining whether the message requests termination of the broadcast service; and
notifying the mobile communication system of termination of the broadcast service provided to the MS if the message requests termination of the broadcast service.

6. The method of claim 5, wherein if the MS is the last MS receiving the broadcast service, the BS terminates the broadcast service by releasing a broadcast channel.

7. The method of claim 5, wherein the message is a location registration message including a location registration cause field set to a value indicating a broadcast service termination request.

8. The method of claim 7, further comprising the step of notifying the mobile communication system of termination of the broadcast service provided to the MS if the BS does not receive from the MS the location registration message including the location registration cause field set to a value indicating a broadcast service maintenance request during a predetermined location registration period.

9. An apparatus for terminating a broadcast service in a mobile station (MS) in a mobile communication system in which a base station (BS) provides the broadcast service to at least one MS, the apparatus comprising:
a session manager for opening, maintaining, and closing a session for the broadcast service; and
a message generator for generating a message requesting termination of the broadcast service upon closure of the session and transmitting the message to the BS.

10. The apparatus of claim 9, wherein the message requesting termination of the broadcast service is a location registration message including a location registration cause field set to a value indicating a broadcast service termination request.

11. The apparatus of claim 9, further comprising a timer set to a location registration period preset between the MS and the BS, wherein the message generator transmits to the BS the location registration message including the location registration cause field set to a value indicating a broadcast service maintenance request whenever the timer expires.
